# EUROPEAN PATENT APPLICATION

(11) **EP 4 600 653 A1**
(43) Date of publication of application: **13.08.2025**
(21) Application number: 23874516.0
(22) Date of filing: 03.08.2023
(51) Int. Cl.: G01N 35/00

(54) **AUTOMATED ANALYZING DEVICE, AND METHOD FOR OPERATING AUTOMATED ANALYZING DEVICE**

(30) Priority: 06.10.2022 JP 2022161565
(71) Applicant: HITACHI HIGH-TECH CORPORATION, Tokyo 105-6409 (JP)
(72) Inventor: YAMAMOTO Haruyoshi, Tokyo 105-6409 (JP); MIYAKAWA Takushi, Tokyo 105-6409 (JP); MIYAKE Masafumi, Tokyo 105-6409 (JP)
(74) Representative: Strehl & Partner mbB
(86) International application number: PCT/JP2023/028491
(87) International publication number: WO 2024/075383

(57) **Abstract**

Provided are an automatic analyzer and an operation method of an automatic analyzer capable of improving a temperature control state of a measurement system as compared with that in the related art. The automatic analyzer includes a dilution liquid flow path 1033 from a dilution liquid accommodation bottle 1032 to a dilution tank 1010, an internal standard liquid flow path 1043 from an internal standard liquid accommodation bottle 1042 to the dilution tank 1010, a measurement solution aspiration nozzle 1052 from the dilution tank 1010 to an analysis unit 1092, a first temperature control unit 1091 that controls temperatures of the dilution tank 1010, the measurement solution aspiration nozzle 1052, and the analysis unit 1092, a second temperature control unit 1036 that controls a temperature independently of the first temperature control unit 1091 and controls temperatures of the dilution liquid flow path 1033 and the internal standard liquid flow path 1043, and heat insulation mechanisms 1037 and 1095 provided between the first temperature control unit 1091 and the second temperature control unit 1036.

## Description

### Technical Field

The present invention relates to an automatic analyzer and an operation method of an automatic analyzer.

### Background Art

As an example of a temperature control system for an electrolyte analyzer that can perform accurate measurement without being affected by outside temperature, Patent Literature 1 describes that a sample temperature control block is disposed in a flow path from a sample aspiration nozzle to an electrode block, the electrode block, a sample temperature control block, and a sensor that measures outside air temperature are provided at various locations, and output of a heater disposed in each block is controlled according to the outside temperature such that the temperatures of an ion selective electrode, a reference electrode, a reference electrode internal solution, a sample and a calibration solution at each electrode flow path are the same.

### Citation List

### Patent Literature

Patent Literature 1: Japanese Unexamined Patent Application Publication No. 2007-93252

### Summary of Invention

### Technical Problem

Ion selective electrodes are used in a wide range of fields such as biology, medicine, and environments because the ion selective electrodes can quickly quantify the concentration of ions to be measured. Particularly in the medical field, there is a close relationship between metabolic reactions of living organisms and ion concentrations. Therefore, ion selective electrodes have been widely used in recent years because the ion selective electrodes can diagnose conditions such as hypertension, kidney disease, and neurological disorders by quantifying specific ions (sodium, potassium, chlorine, and the like) contained in biological samples such as blood and urine.

In addition, electrolyte concentrations in living organisms are normally maintained within a narrow concentration range, and even slight changes in the concentrations have important implications. Therefore, ion selective electrodes are required to have extremely high measurement accuracy, and various techniques are being developed to reduce measurement errors as much as possible.

In addition, in clinical sites, there is a need to continuously analyze a large number of samples.

Many electrolyte measurement devices utilize a method that is called an ion selective electrode method. The ion selective electrode method is to measure an electrolyte concentration in a sample by measuring a difference in potential between an ion selective electrode and a reference electrode. The ion selective electrode includes an ion-sensitive membrane that generates a difference in potential in response to ionic components.

This potential varies depending on the electrolyte concentration in the sample. The reference electrode is configured to be in contact with a solution, which is referred to as a reference electrode solution, to maintain a reference potential. As the reference electrode solution, for example, a highly concentrated KCI aqueous solution is used.

In addition, as the ion selective electrode and the reference electrode, a flow cell type device can also be formed to achieve high throughput. This flow cell type device includes, in a housing, a flow path for supplying a sample to be measured, and is provided with a sensitive membrane in contact with the flow path.

In the field of clinical testing, a non-dilution method and a dilution method are known as methods for quantifying the concentration of electrolytes contained in blood, particularly biological samples such as serum, plasma, and urine. The non-dilution method is a method for measuring biological samples as they are without diluting the biological samples. Meanwhile, the dilution method is to dilute a predetermined amount of a biological sample with a predetermined amount of a dilution liquid, and measure the diluted sample liquid (diluted biological sample) using an ion selective electrode method or the like.

In the dilution method, high stability can be achieved in the ion-selective electrode method because the amount of a sample solution required is small, the concentration of coexisting substances such as proteins and lipids in a measurement solution is low, and the effect of contamination due to the coexisting substances is low.

In electrolyte measurement devices for biological examinations, a measurement method in which an ion-selective electrode method using a flow cell method and a dilution method are combined is currently mainstream. A container that is called a dilution tank is used to dilute a sample. The diluted biological sample prepared in the dilution tank is sent to a flow cell type ion selective electrode through a pipe, and the sample is measured.

In general, an electrolyte analysis module can perform a more accurate measurement when the difference between the temperature of a measurement unit (electrode) and the temperature of a liquid fed to the electrode is smaller. Therefore, for the purpose of ensuring analytical performance, a liquid at a constant temperature may be circulated around a flow path and the analysis module to control the temperature at once.

In addition, since the measurement unit (electrode) that is a consumable part can be easily replaced, a structure in which the entire analysis module is covered with a temperature control mechanism may not be adopted, and a portion around the measurement unit (electrode) may be movable and may be opened and closed and only a heat insulation material may be attached to a lid.

However, in a case where such a structure is used, a temperature gradient may occur in a portion of the measurement unit (electrode) near the lid, and a temperature control state may become partially unstable.

The present invention provides an automatic analyzer and an operation method of an automatic analyzer that are capable of improving a temperature control state of a measurement system as compared with that in the related art. Solution to Problem

The present invention includes a plurality of means for solving the above-described issues, but an example thereof includes a dispensing unit configured to dispense a sample; an analysis module configured to analyze the sample dispensed by the dispensing unit; an accommodation unit configured to accommodate a liquid to be used for analysis of the sample; a first flow path from the accommodation unit to the dispensing unit; a second flow path from the dispensing unit to the analysis module; a first temperature control unit configured to control temperatures of the dispensing unit, the second flow path, and the analysis module; a second temperature control unit configured to perform temperature control independently of the first temperature control unit and control a temperature of the first flow path; and a heat insulation material provided between the first temperature control unit and the second temperature control unit.

### Advantageous Effects of Invention

According to the present invention, it is possible to improve a temperature control state of a measurement system as compared with that in the related art. Issues, configurations, and effects other than those described above will be made clear by the description of the following embodiments.

### Brief Description of Drawings

[FIG. 1] FIG. 1 is a diagram showing a schematic configuration of an electrolyte automatic analyzer according to an embodiment.
[FIG. 2] FIG. 2 is a diagram showing a state of a dilution tank of the electrolyte automatic analyzer according to the embodiment.
[FIG. 3] FIG. 3 is a diagram showing a state of the dilution tank of the electrolyte automatic analyzer according to the embodiment.
[FIG. 4] FIG. 4 is a diagram showing a state of the dilution tank of the electrolyte automatic analyzer according to the embodiment.
[FIG. 5] FIG. 5 is a flowchart showing an outline of a sample analyzing step in the electrolyte automatic analyzer according to the example.
[FIG. 6] FIG. 6 is a flowchart showing an outline of a sample measuring step in the sample analyzing step performed by the electrolyte automatic analyzer according to the embodiment.

### Description of Embodiments

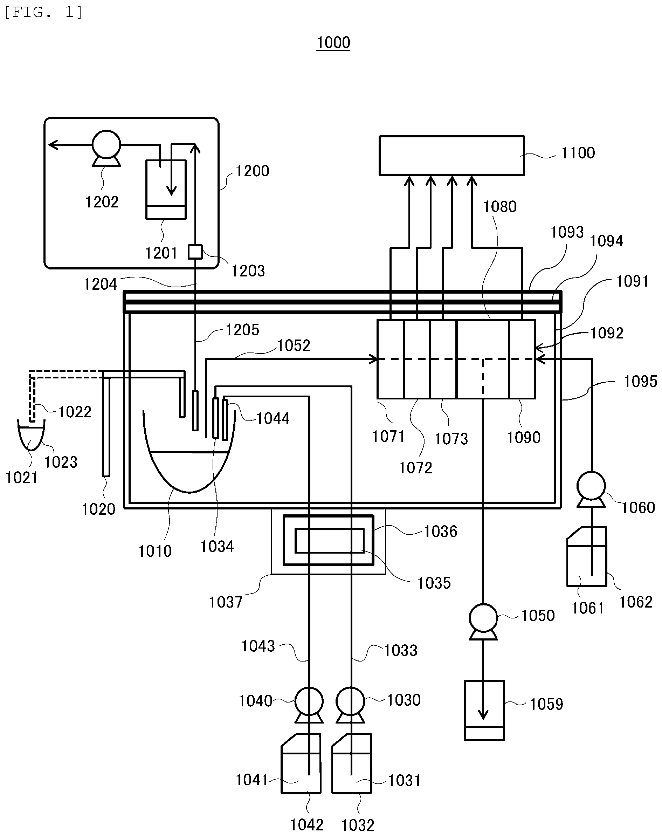

Embodiments of an automatic analyzer and an operation method of the automatic analyzer according to the present invention will be described with reference to FIGS. 1 to 6. Note that the embodiments of the present invention are not limited to the embodiments described later, and various modifications can be made within the scope of the technical idea.

In addition, in the drawings used in the present specification, identical or corresponding components are given the same or similar reference signs, and repeated descriptions of these components may be omitted.

### (1-1) Configuration of Apparatus

First, an overall configuration of an electrolyte automatic analyzer 1000 will be described with reference to FIG. 1. FIG. 1 is a diagram showing a schematic configuration of the electrolyte automatic analyzer 1000 according to the present embodiment.

The electrolyte automatic analyzer 1000 shown in FIG. 1 is an apparatus configured to measure the concentration of ions contained in a sample, and includes a dilution tank 1010, a sample dispensing mechanism 1020, a dilution liquid dispensing mechanism 1030, an internal standard liquid dispensing mechanism 1040, a liquid feeding mechanism 1050, a reference electrode liquid feeding mechanism 1060, an analysis unit 1092 configured to perform ion concentration analysis, a measurement control device 1100, and a waste liquid mechanism 1200 for the dilution tank, and the like.

In the following description, an example in which the present invention is applied to the electrolyte automatic analyzer is described. However, the present invention is applicable to other automatic analyzers.

The measurement control device 1100 is a component that controls an operation of analyzing each of devices inside the electrolyte automatic analyzer 1000, and can be constituted by a computer including a display, input devices such as a keyboard and a mouse, a storage unit, a CPU, and a memory, and may be constituted by one computer or another computer, and is not particularly limited.

An operation of each of the devices is controlled by the measurement control device 1100 based on various programs recorded in a storage device. Processes of controlling the operations by the measurement control device 1100 may be described in one program, each of the processes may be divided into a plurality of programs, or a combination thereof may be used. Some or all of the programs may be implemented by dedicated hardware or may be modularized.

The sample dispensing mechanism 1020 aspirates a sample 1021 into a sample dispensing nozzle 1022. After that, the measurement control device 1100 brings a tip portion of the sample dispensing nozzle 1022 into contact with an inner wall surface of the dilution tank 1010 and causes all or a part of the aspirated sample 1021 to be discharged.

The dilution tank 1010 is a container-shaped component to be used to dispense a sample.

Note that not only a mode in which the sample is diluted but also a mode in which the sample is directly drawn into the analysis unit 1092 can be adopted. In this case, the dilution tank 1010 is not present and a first temperature control unit 1091 to be described later controls the temperature of the sample 1021.

The analysis unit 1092 is a component that analyzes a sample dispensed in the dilution tank 1010, and includes a flow cell type chloride ion selective electrode (hereinafter referred to as "Cl-ISE") 1071, a flow cell type potassium ion selective electrode (hereinafter referred to as "K-ISE") 1072, a flow cell type sodium ion selective electrode (hereinafter referred to as "Na-ISE") 1073, a flow cell type liquid junction 1080, and a flow cell type reference electrode 1090.

The first temperature control unit 1091 is a metal box that performs temperature control by heating the dilution tank 1010, a measurement solution aspiration nozzle 1052, and the analysis unit 1092, includes a cover 1094, a cover 1093, a heat insulation mechanism 1095, and the like, and uses radiant heat to keep the vicinity of measurement units, such as the analysis unit 1092, the dilution tank 1010, and the measurement solution aspiration nozzle 1052 warm.

The cover 1094 is a member that surrounds the dilution tank 1010, the measurement solution aspiration nozzle 1052, and the analysis unit 1092, can exchange heat with the first temperature control unit 1091, and is made of a material with high heat conductivity, such as metal or resin with a metal plate or metal mesh provided inside the resin.

The cover 1093 is a heat insulation material that covers the cover 1094 and prevents heat transfer at the opening of the first temperature control unit 1091.

The heat insulation mechanism 1095 is assembled with the cover 1093 and is a substantially box-shaped heat insulation material that accommodates the analysis unit 1092 and the dilution tank 1010. The heat insulation mechanism 1095 is provided between the first temperature control unit 1091 and a second temperature control unit 1036.

In addition, in the electrolyte automatic analyzer 1000, a sample accommodation container 1023 that accommodates the sample 1021, a dilution liquid accommodation bottle 1032 that accommodates a dilution liquid 1031 that is a liquid to be used to analyze the sample, an internal standard liquid accommodation bottle 1042 that accommodates an internal standard liquid 1041 that is a liquid to be used to analyze the sample, a reference electrode liquid 1061, and a reference electrode liquid accommodation bottle 1062 can be disposed. Furthermore, in the electrolyte automatic analyzer 1000, a waste liquid reservoir 1059 can be disposed.

The dilution liquid dispensing mechanism 1030 includes a dilution liquid dispensing nozzle 1034 and a dilution liquid flow path 1033, and supplies the dilution liquid 1031 from the dilution liquid accommodation bottle 1032 to the dilution tank 1010. A flow path omitted for the purpose of the illustration is further connected to the dilution liquid dispensing nozzle 1034.

Similarly, the internal standard liquid dispensing mechanism 1040 includes an internal standard liquid dispensing nozzle 1044 and an internal standard liquid flow path 1043, and supplies the internal standard liquid 1041 from the internal standard liquid accommodation bottle 1042 to the dilution tank 1010.

The second temperature control unit 1036 includes a temperature control mechanism 1035 serving as a heat source for the second temperature control unit 1036, and a heat insulation mechanism 1037 for insulating the second temperature control unit 1036 from heat from the surroundings. This second temperature control unit 1036 is a metal box that performs temperature control independently of the first temperature control unit 1091, and controls temperatures of the dilution liquid flow path 1033 and the internal standard liquid flow path 1043 with heat of the temperature control mechanism 1035. In the present embodiment, the second temperature control unit 1036 is the metal box, but only needs to be capable of transmitting the heat of the temperature control mechanism 1035 to the dilution liquid flow path 1033, and may have a plate-like structure in contact with the dilution liquid flow path 1033 and the second temperature control unit 1036. In addition, the second temperature control unit 1036 is not limited to metal and may be made of any material having high thermal conductivity.

Among them, the heat insulation mechanism 1037 is provided between the first temperature control unit 1091 and the second temperature control unit 1036, and the heat insulation mechanism 1037 and the heat insulation mechanism 1095 ensure that the control of the temperature of the first temperature control unit 1091 and the control of the temperature of the second temperature control unit 1036 are each performed independently.

In addition, as shown in FIG. 1, the heat insulation mechanisms 1037 and 1095 are basically in close contact with each other such that the dilution liquid flow path 1033 and the internal standard liquid flow path 1043 are introduced inside the first temperature control unit 1091 in a state in which the dilution liquid flow path 1033 and the internal standard liquid flow path 1043 are covered with the heat insulation mechanisms 1037 and 1095 without being exposed to the atmosphere after passing through the second temperature control unit 1036. Therefore, it is desirable that portions of the dilution liquid flow path 1033 and the internal standard liquid flow path 1043 on the downstream side of the second temperature control unit 1036 be disposed in the heat insulation mechanisms 1037 and 1095 or in a space subjected to temperature control by the first temperature control unit 1091.

The liquid feeding mechanism 1050 includes the measurement solution aspiration nozzle 1052 forming a flow path from the dilution tank 1010 to the analysis unit 1092, and a mechanism that drives the measurement solution aspiration nozzle 1052 in a vertical direction. The measurement solution aspiration nozzle 1052 is coupled to the vertical drive mechanism described above. In addition, a flow path (not shown) is connected to the measurement solution aspiration nozzle 1052.

A waste liquid mechanism 1200 for the dilution tank includes a waste liquid trap 1201, a vacuum pump 1202, a solenoid valve 1203, a waste liquid flow path 1204, a waste liquid nozzle 1205 forming an end portion of the liquid flow path 1204, and a vertical drive mechanism (not shown) for the waste liquid nozzle 1205. The vacuum pump 1202 is located on the downstream side of the waste liquid trap 1201, and introduces, into the waste liquid trap 1201, a waste liquid aspirated from the waste liquid nozzle 1205 through the solenoid valve 1203 in an open state. The waste liquid temporarily reserved in the waste liquid trap 1201 is transferred to the waste liquid reservoir 1059 by a waste liquid transfer mechanism (not shown).

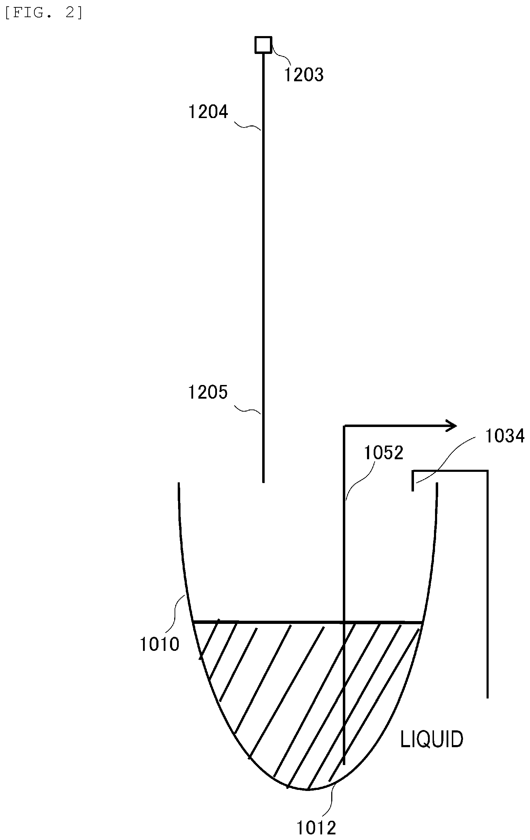

A tip portion of the measurement solution aspiration nozzle 1052 can be located near a deepest portion 1012 (shown in FIG. 2) of the dilution tank 1010 by the dedicated vertical drive mechanism. Similarly, a tip portion of the waste liquid nozzle 1205 can be located near the deepest portion 1012 of the dilution tank 1010 by the dedicated vertical drive mechanism.

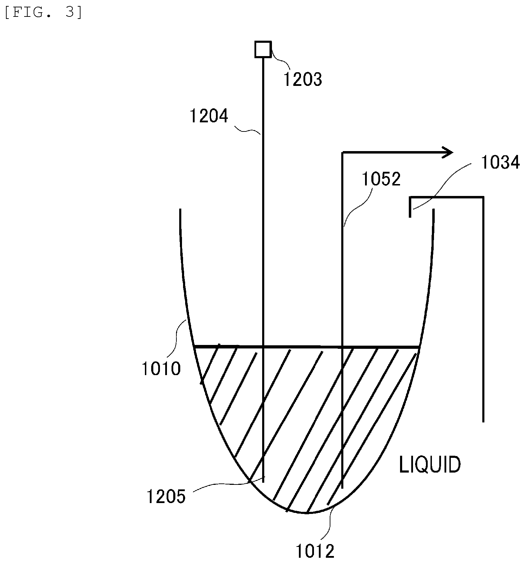

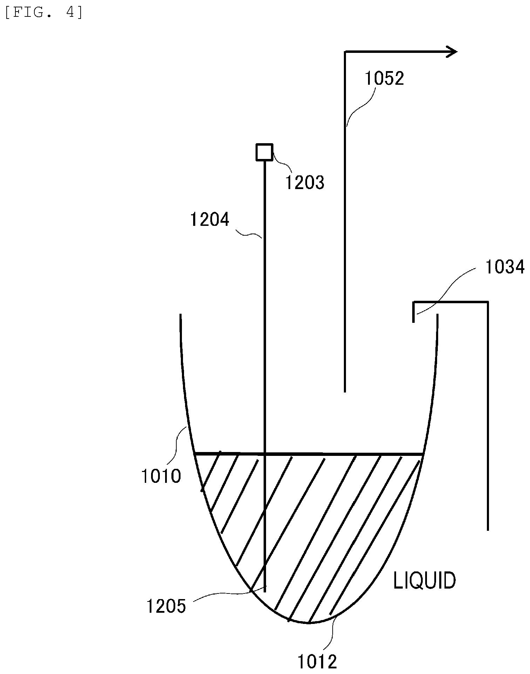

FIG. 2 schematically shows a state in which only the tip portion of the measurement solution aspiration nozzle 1052 is located near the deepest portion 1012 of the dilution tank 1010. FIG. 3 schematically shows a state in which both of the tip portion of the measurement solution aspiration nozzle 1052 and the tip portion of the waste liquid nozzle 1205 are located near the deepest portion 1012 of the dilution tank 1010. FIG. 4 shows a state in which only the tip portion of the waste liquid nozzle 1205 is located near the deepest portion 1012 of the dilution tank 1010.

In the present embodiment, the measurement solution aspiration nozzle 1052 and the waste liquid nozzle 1205 are arranged at positions (separated from each other by 180°) facing each other across a vertical line, which is a rotation axis of the dilution tank 1010. The measurement solution aspiration nozzle 1052 and the waste liquid nozzle 1205 according to the present embodiment are moved up and down in parallel to the vertical line by the respective dedicated vertical drive mechanisms.

In the present embodiment, a plurality of flow paths for liquid and the like for calibration may be provided as in the second temperature control unit 1036 and the heat insulation mechanism 1037.

In addition, in the example shown in FIG. 1, the temperatures of the dilution liquid flow path 1033 and the internal standard liquid flow path 1043 are controlled by the second temperature control unit 1036, the temperature control mechanism 1035, and the heat insulation mechanism 1037 for heat insulation, but the second temperature control unit 1036, the temperature control mechanism 1035, and the heat insulation mechanism 1037 for heat insulation may be separately provided for each of the dilution liquid flow path 1033 and the internal standard liquid flow path 1043.

Furthermore, the first temperature control unit 1091 and the second temperature control unit 1036 have calibration curves of appropriate outside temperature and temperature for temperature control for each of the first temperature control unit 1091 and the second temperature control unit 1036. The temperature for temperature control by each of the first temperature control unit 1091 and the second temperature control unit 1036 is controlled based on the outside temperature of an environment in which the electrolyte automatic analyzer 1000 is disposed.

In addition, the first temperature control unit 1091 and the second temperature control unit 1036 perform control with an on/off control pattern selected based on at least either the timing of feeding a liquid or the amount of the liquid to be fed.

### (1-2) Measurement Operation

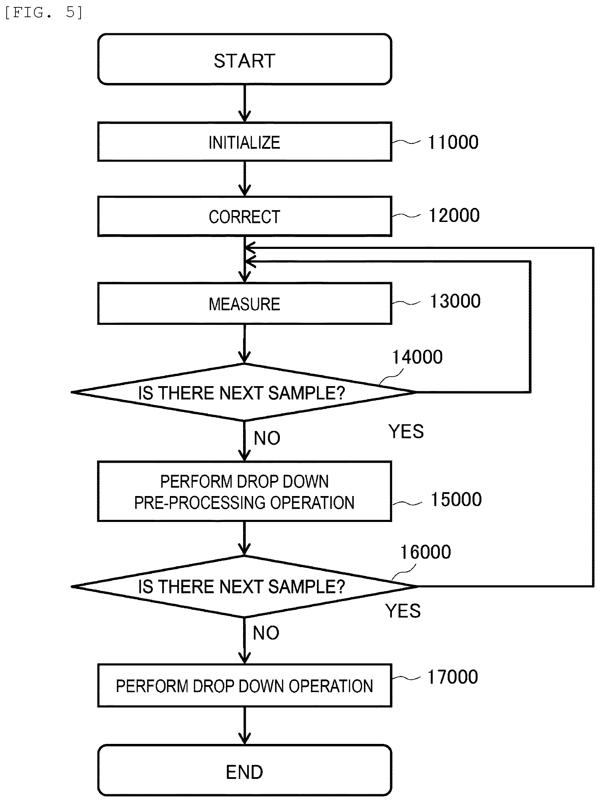

FIG. 5 is a flowchart showing an outline of an operation that is executed in the electrolyte automatic analyzer 1000.

The operation that is executed in the electrolyte automatic analyzer 1000 is automatically and continuously executed by a program included in the measurement control device 1100. In the present embodiment, after the start of the electrolyte automatic analyzer 1000, after an initial step 11000 and a calibration step 12000, a measurement step 13000 is repeated for the number of samples, and after a determination step 14000 of determining whether all or some of the samples have been measured, a shutdown step 15000 is executed

After the execution of the shutdown step 15000, it is determined whether or not a next sample is present in a next sample presence/absence determination step 16000. In the next sample presence/absence determination step 16000, if it is determined that the next sample is present, the operation returns to the measurement step 13000.

In the next sample presence/absence determination step 16000, if it is determined that the next sample is absent, the shutdown step 17000 is executed.

### (1-2-1) Initial Step 11000

The initial step 11000 includes preparations for starting-up, cleaning, and the like of each element mechanism constituting the electrolyte automatic analyzer 1000. As a part of the initialization, the measurement control device 1100 feeds the reference electrode liquid 1061 to the flow cell type liquid junction 1080 via the reference electrode 1090. In addition, the measurement control device 1100 dispenses the internal standard liquid 1041 into the dilution tank 1010 and feeds it to the flow cell type liquid junction 1080 through the Cl-ISE 1071, the K-ISE 1072, and the Na-ISE 1073. By the liquid feeding, conditioning of each ISE is performed.

### (1-2-2) Calibration Step 12000

The calibration step 12000 includes a low concentration standard liquid measurement step, a high concentration standard liquid measurement step, a calibration liquid measurement step, and a calibration curve generation step, and the like. A procedure for measuring a low concentration standard liquid, a high concentration standard liquid, and a calibration liquid is based on the measurement step 13000 to be described later. The standard liquids of each concentration and the calibration liquid are measured in a similar manner to the sample, and the electromotive force of each ISE is recorded.

In the calibration curve generation step, the measurement control device 1100 obtains slope sensitivity from results of measuring electromotive forces for two kinds of standard liquids having high and low concentrations. The measurement control device 1100 obtains the concentration of the internal standard liquid based on the slope sensitivity and an electromotive force for the internal standard liquid. In addition, the measurement control device 1100 obtains a calculated concentration of the calibration liquid based on a result of measuring an electromotive force for the calibration liquid and the slope sensitivity.

Furthermore, the measurement control device 1100 obtains an offset correction value based on a difference between a true concentration (displayed value) of the calibration liquid and the calculated concentration of the calibration liquid. The slope sensitivity and the offset correction value are referred to as a "calibration curve".

### (1-2-3) Measurement Step 13000

The measurement step 13000 mainly includes a sample measurement step 13100, an internal standard liquid measurement step (not shown), and a sample concentration calculation step 13300.

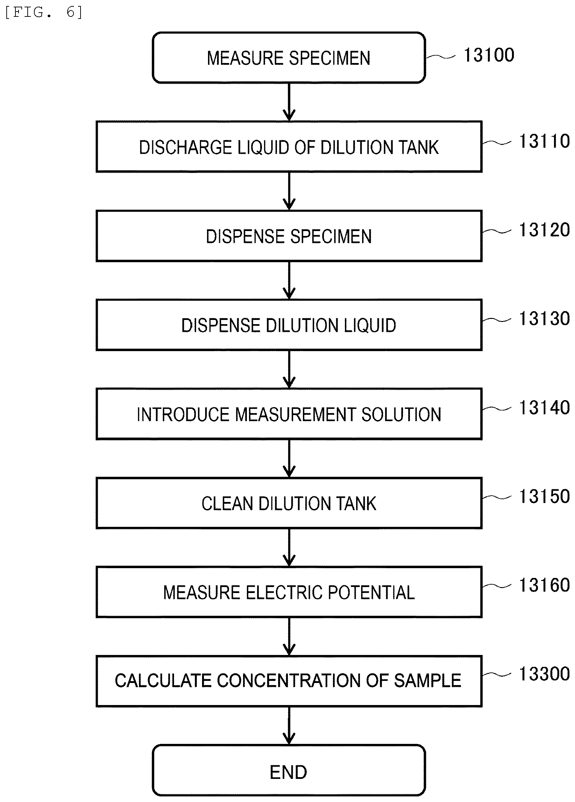

FIG. 6 is a flowchart showing an outline of the sample measurement step 13100. In FIG. 6, the sample measurement step 13100 includes a dilution tank waste liquid step 13110, a sample dispensing step 13120, a dilution liquid dispensing step 13130, a measurement solution introduction step 13140, a dilution tank cleaning step 13150, a potential measurement step 13160, a sample concentration calculation step 13300, and the like. Details of each step of the sample measurement step 13100 will be described below.

In the dilution tank waste liquid step 13110, the measurement control device 1100 causes the waste liquid mechanism 1200 for the dilution tank to operate to discharge a liquid (the internal standard liquid 1041, the dilution liquid 1031, system water (not shown), and the like) inside the dilution tank 1010. Note that the solenoid valve 1203 is closed until this step is started. The solenoid valve 1203 is basically closed in the steps other than the dilution tank waste liquid step. When the solenoid valve 1203 is opened, the inside of the waste liquid flow path 1204 and the inside of the waste liquid trap 1201 are evacuated and depressurized by the action of the vacuum pump 1202. On the other hand, when the solenoid valve 1203 is closed, the pressure inside the waste liquid nozzle 1205 is maintained at atmospheric pressure.

After the start of the measurement step 13000, the measurement control device 1100 drives the vertical drive mechanism to immerse the tip portion of the waste liquid nozzle 1205 into the dilution tank 1010 (see FIG. 4). More specifically, the tip portion of the waste liquid nozzle 1205 is placed at a position separated by approximately 1 mm in a radial direction (horizontal direction) from the deepest portion 1012 of the dilution tank 1010 and by 0.5 mm vertically upward from the surface of the dilution tank 1010. The measurement control device 1100 opens the solenoid valve 1203 in this state and provides a depressurized environment to the dilution tank 1010 through the waste liquid nozzle 1205.

The liquid inside the dilution tank 1010 is discharged into the waste liquid trap 1201 through the waste liquid nozzle 1205, the waste liquid flow path 1204, and the solenoid valve 1203. After the discharging for approximately 1 second, the measurement control device 1100 closes the solenoid valve 1203 and interrupts the depressurization. Then, the pressure inside the waste liquid nozzle 1205 returns to the atmospheric pressure. Lastly, the measurement control device 1100 drives the vertical drive mechanism (not shown) and locates the tip portion of the waste liquid nozzle 1205 vertically above the dilution tank 1010 (see FIG. 2). That is, the tip portion of the waste liquid nozzle 1205 is moved to the outside of the dilution tank 1010.

In the sample dispensing step 13120, the measurement control device 1100 uses the sample dispensing mechanism 1020 to aspirate the sample 1021 into the sample dispensing nozzle 1022. After that, the measurement control device 1100 brings a tip portion of the sample dispensing nozzle 1022 into contact with an inner wall surface of the dilution tank 1010 and causes all or a part of the aspirated sample 1021 to be discharged.

In the dilution liquid dispensing step 13130, the measurement control device 1100 uses the dilution liquid dispensing mechanism 1030 to discharge the dilution liquid 1031 toward the sample 1021 through the dilution liquid dispensing nozzle 1034 from a position above the sample 1021 discharged to the dilution tank 1010.

The dilution liquid 1031 envelopes the sample 1021 while spiraling along the inner surface of the dilution tank 1010, and flows onto the inner bottom of the dilution tank 1010, the sample 1021 is diluted by the dilution liquid 1031, and the sample 1021 and the dilution liquid 1031 are mixed uniformly. In this dilution liquid dispensing step 13130, the diluted sample is obtained in the dilution tank 1010 by diluting the sample 1021 at a predetermined ratio (hereinafter referred to as a "dilution ratio") with the dilution liquid 1031. In the present embodiment, the dilution ratio is 31 times. The diluted sample is a type of sample solution and is referred to as a "sample solution".

In the measurement solution introduction step 13140, the measurement control device 1100 uses the dedicated vertical drive mechanism (not shown) to immerse the measurement solution aspiration nozzle 1052 into the sample solution in the dilution tank 1010 (see FIG. 2). In the steps other than the measurement solution introduction step 13140, this vertical drive mechanism basically locates the measurement solution aspiration nozzle 1052 vertically above the dilution tank 1010, and locates the tip of the measurement solution aspiration nozzle 1052 outside the dilution tank 1010.

Next, the measurement control device 1100 causes the liquid feeding mechanism 1050 and the reference electrode liquid feeding mechanism 1060 to cooperate with each other to feed the reference electrode liquid 1061 to the flow cell type liquid junction 1080 through the reference electrode 1090.

Subsequently, the measurement control device 1100 uses the sample solution in the dilution tank 1010 as a measurement solution and feeds the sample solution to the flow cell type liquid junction 1080 through the Cl-ISE 1071, the K-ISE 1072, and the Na-ISE 1073 in order. At the confluence of the flow paths inside the flow cell type liquid junction 1080, the measurement solution and the reference electrode liquid 1061 come into contact with each other to form a free flow type liquid junction, and a potential can be measured.

Thereafter, the measurement control device 1100 discharges the liquid between the flow cell type liquid junction 1080 and the liquid feeding mechanism 1050 to the waste liquid reservoir 1059. After the end of the liquid feeding, the measurement control device 1100 uses the vertical drive mechanism for the measurement solution aspiration nozzle 1052 to lift up the measurement solution aspiration nozzle 1052 out of the dilution tank 1010.

In the dilution tank cleaning step 13150, the measurement control device 1100 first performs the same operation as the dilution tank waste liquid step 13110 described above, and drains the sample solution remaining in the dilution tank 1010. Next, the measurement control device 1100 controls the dilution liquid dispensing mechanism 1030 and the internal standard liquid dispensing mechanism 1040, and uses a syringe pump (not shown) connected to the sample dispensing nozzle 1022 to dispense system water into the dilution tank 1010 through the sample dispensing nozzle 1022 and clean the dilution tank 1010. It is possible to dispense the dilution liquid 1031 and the internal standard liquid 1041 instead of the system water. In addition, it is possible to dispense and mix the dilution liquid 1031, the internal standard liquid 1041, and the system water and clean the dilution tank 1010.

In the potential measurement step 13160, the measurement control device 1100 measures and records the electromotive force of each of the flow cell type Cl-ISE 1071, the K-ISE 1072, and the Na-ISE 1073 with reference to the reference electrode 1090 using a built-in voltage amplifier, an AD converter, a microcomputer, and the like.

Thereafter, the sample concentration calculation step 13300 is executed. In the sample concentration calculation step 13300, the measurement control device 1100 obtains the concentration ratio of the sample and the internal standard solution based on a difference between electromotive forces for the dilution sample and the internal standard liquid in each ISE obtained in the potential measurement step 13160 of the sample measurement step 13100 and the potential measurement step 13160 that is the internal standard liquid measurement step, and the slope sensitivity and the dilution ratio (31 times in the present embodiment) obtained by the calibration step 12000 (FIG. 5) that is the calibration curve generation step. The measurement control device 1100 multiplies this concentration ratio by the concentration of the internal standard solution obtained in the calibration step 12000 to obtain the concentration of the sample (before offset correction). By adding the offset correction value to the concentration of the sample, the measurement control device 1100 obtains the concentration of the sample (after the offset correction).

Through the above-described procedure, the measurement control device 1100 obtains the concentrations of Cl, K, and Na in the sample, and reports the results to the user.

### (1-2-4) Determination Step 14000 and Shutdown Step 15000

Return to the description of FIG. 5. After the measurement step 13000, the measurement control device 1100 executes the determination step 14000 of determining whether all or some of the samples have been measured. If all or some of the samples have been measured, the measurement control device 1100 executes the shutdown step 15000.

The temperature control mechanism 1035 and the heat insulation mechanism 1037 may be thermally separated by providing a physical space or may be in physical contact with the waste liquid nozzle 1205, the dilution liquid dispensing nozzle 1034, the measurement solution aspiration nozzle 1052, the Cl-ISE 1071, the K-ISE 1072, the Na-ISE 1073, the flow cell type liquid junction 1080, and the flow cell type reference electrode 1090 by using the heat insulation material.

When the steps up to the shutdown step 15000 are completed and a next sample is not present, after that, the step 17000 of shutting down the apparatus is executed to prepare for power off.

Next, effects of the present embodiment will be described.

The electrolyte automatic analyzer 1000 according to the present embodiment described above includes the dilution tank 1010 to be used to dispense a sample, the analysis unit 1092 that analyzes the sample dispensed in the dilution tank 1010, the dilution liquid accommodation bottle 1032 and the internal standard liquid accommodation bottle 1042 that accommodate the dilution liquid 1031 and the internal standard liquid 1041 to be used to analyze the sample, the dilution liquid flow path 1033 and the internal standard liquid flow path 1043 from the dilution liquid accommodation bottle 1032 and the internal standard liquid accommodation bottle 1042 to the dilution tank 1010, the measurement solution aspiration nozzle 1052 from the dilution tank 1010 to the analysis unit 1092, the first temperature control unit 1091 that controls the temperatures of the dilution tank 1010, the measurement solution aspiration nozzle 1052, and the analysis unit 1092, the second temperature control unit 1036 that performs temperature control independently of the first temperature control unit 1091 and controls the temperatures of the dilution liquid flow path 1033 and the internal standard liquid flow path 1043, and the heat insulation mechanisms 1037 and 1095 provided between the first temperature control unit 1091 and the second temperature control unit 1036.

Therefore, it is possible to reduce the effect of temperature control by the second temperature control unit 1036 for the dilution liquid flow path 1033 and the internal standard liquid flow path 1043, which have fast response speeds on the temperature control, on the dilution tank 1010, the measurement solution aspiration nozzle 1052, and the analysis unit 1092 whose temperatures are controlled by the first temperature control unit 1091, as compared with conventional techniques. Thus, the temperature control state of the measurement unit (electrode) can be stabilized, as compared with the conventional techniques. Therefore, the occurrence of a temperature gradient with respect to the reagents (dilution liquid 1031 and the internal standard liquid 1041) that have passed through the second temperature control unit 1036 for preheating can be suppressed more strongly than those in the conventional techniques, and the stability of analytical performance can be improved.

Since each of portions that are included in the dilution liquid flow path 1033 and the internal standard liquid flow path 1043 and located on the downstream side of the second temperature control unit 1036 is disposed in the heat insulation mechanism 1037 or 1095, or a space subjected to temperature control by the first temperature control unit 1091, it is possible to prevent a change in the temperatures of the agents (the dilution liquid 1031 and the internal standard liquid 1041) subjected to the temperature control as much as possible and to implement more stable analysis.

Further, each of the first temperature control unit 1091 and the second temperature control unit 1036 has a calibration curve of a temperature for temperature control with respect to the outside temperature of an environment in which the electrolyte automatic analyzer 1000 is disposed, and each of the first temperature control unit 1091 and the second temperature control unit 1036 independently controls the temperature for temperature control based on the outside temperature, and thus can more appropriately control two regions that are desired to be controlled at different response speeds.

In addition, at least either one of the first temperature control unit 1091 and the second temperature control unit 1036 performs control with an on/off control pattern selected based on at least one of the timing of feeding the liquid and the amount of the liquid to be fed, thereby prevent a temperature gradient of a reagent that has passed through a preheating unit from occurring due to partial instability of the temperature control state of the measurement unit (electrode), and further increasing the stability of analytical performance.

Further, since the cover 1094 is provided, which surrounds the dilution tank 1010, the measurement solution aspiration nozzle 1052, and the analysis unit 1092 and is capable of exchanging heat with the first temperature control unit 1091, heat is transferred to the cover 1094 by only temperature control by the first temperature control unit 1091, and the temperature of the analysis unit 1092 can be efficiently controlled by radiant heat.

In addition, since the cover 1094 includes the metal portion, can have properties of shielding an electromagnetic wave, and can protect the inside of the first temperature control unit 1091, particularly, the analysis unit 1092 from the electromagnetic wave, it is possible to implement more precise analysis.

### <Others>

The present invention is not limited to the above-described embodiments, and various modifications and applications can be made. The above-described embodiments are described in detail to clearly explain the present invention, and are not necessarily limited to including all of the configurations described above.

### List of Reference Signs

1000 electrolyte automatic analyzer
1010 dilution tank (dispensing unit)
1012 deepest portion
1020 sample dispensing mechanism
1021 sample
1022 sample dispensing nozzle (dispensing unit)
1023 sample accommodation container
1030 dilution liquid dispensing mechanism
1031 dilution liquid
1032 dilution liquid accommodation bottle (accommodation unit)
1033 dilution liquid flow path (first flow path)
1034 dilution liquid dispensing nozzle
1035 temperature control mechanism
1036 second temperature control unit
1037 heat insulation mechanism (heat insulation material)
1040 internal standard liquid dispensing mechanism
1041 internal standard liquid
1042 internal standard liquid accommodation bottle (accommodation unit)
1043 internal standard liquid flow path (first flow path)
1044 internal standard liquid dispensing nozzle
1050 liquid feeding mechanism
1052 measurement solution aspiration nozzle (second flow path)
1059 waste liquid reservoir
1060 reference electrode liquid feeding mechanism
1061 reference electrode liquid
1062 reference electrode liquid accommodation bottle
1071 Cl-ISE (chloride ion selective electrode)
1072 K-ISE (potassium ion selective electrode)
1073 Na-ISE (sodium ion selective electrode)
1080 liquid junction
1090 reference electrode
1091 first temperature control unit
1092 analysis unit (analysis module)
1093 cover
1094 cover (accommodation lid)
1095 heat insulation mechanism (heat insulation material)
1100 measurement control device
1200 waste liquid mechanism for dilution tank
1201 waste liquid trap
1202 vacuum pump
1203 solenoid valve
1204 waste liquid flow path
1205 waste liquid nozzle

## Claims

1. An automatic analyzer comprising:
a dispensing unit configured to dispense a sample;
an analysis module configured to analyze the sample dispensed by the dispensing unit;
an accommodation unit configured to accommodate a liquid to be used for analysis of the sample;
a first flow path from the accommodation unit to the dispensing unit;
a second flow path from the dispensing unit to the analysis module;
a first temperature control unit configured to control temperatures of the dispensing unit, the second flow path, and the analysis module;
a second temperature control unit configured to control a temperature independently of the first temperature control unit and control a temperature of the first flow path; and
a heat insulation material provided between the first temperature control unit and the second temperature control unit.

2. The automatic analyzer according to claim 1, wherein
a portion of the first flow path at a downstream side with respect to the second temperature control unit is disposed in a heat insulation material or in a space of which a temperature is controlled by the first temperature control unit.

3. The automatic analyzer according to claim 1, wherein
the first temperature control unit and the second temperature control unit each have a calibration curve of a controlled temperature with respect to an outside air temperature of an environment in which the automatic analyzer is provided, and each independently control the controlled temperature based on the outside air temperature.

4. The automatic analyzer according to claim 3, wherein
at least one of the first temperature control unit and the second temperature control unit is controlled by a pattern of on and off control selected based on at least one of a liquid feeding timing of the liquid or a liquid feeding amount of the liquid.

5. The automatic analyzer according to claim 1 further comprising:
an accommodation lid surrounding the dispensing unit, the second flow path, and the analysis module and configured to exchange heat with the first temperature control unit.

6. The automatic analyzer according to claim 5, wherein
the accommodation lid includes a metal portion.

7. An operation method of an automatic analyzer, the automatic analyzer including
a dispensing unit configured to dispense a sample,
an analysis module configured to analyze the sample dispensed by the dispensing unit, and
an accommodation unit configured to accommodate a liquid used for analysis of the sample, the operation method comprising:
independently controlling temperatures by providing a heat insulation material between a first flow path from the accommodation unit to the dispensing unit, and the dispensing unit, a second flow path from the dispensing unit to the analysis module, and the analysis module.
